# EUROPEAN PATENT APPLICATION

(11) **EP 2 107 537 A1**
(43) Date of publication of application: **07.10.2009**
(21) Application number: 08251317.7
(22) Date of filing: 04.04.2008
(51) Int. Cl.: G08B 13/196, G08B 25/08, H04L 12/28, H04N 7/18

(54) **Video surveillance and home security apparatus using the UMTS network and a method for the management of said apparatus**

(71) Applicant: Hutchison Whampoa Three G IP (Bahamas) Limited, Nassau, New Providence (BS)
(72) Inventor: Bonanomi, Ferruccio, 20090 Trezzano sul Naviglio (Milan) (IT)
(74) Representative: Jennings, Michael John

(57) **Abstract**

The present invention provides for an advanced UMTS terminal specifically designed as a video surveillance product which allows the user to manage, monitor and receive alerts from remote locations over the UMTS cellular network. The device has onboard local wireless connectivity which allows the user to simply and intuitively control "home automation" functions directly from a UMTS device. The apparatus provides for: UMTS/GPRS connectivity, privacy management through a white list, alerting via outgoing video call, MMS or SMS messages, and user configuration via video call, and local connectivity to various sensors and/or actuators through standard wireless connections. Video cameras are also provided which can be controlled remotely using DTMF control and allowing local storage of video images.

## Description

### FIELD OF INVENTION

The present invention relates to a video surveillance and home security apparatus using the UMTS network and a method for the management of said apparatus.

### BACKGROUND

Residential and commercial housebreakings or burglaries are a more and more frequently occurring crime. An increasing number of residential property owners possess security systems for the detection of irregular or wilful intrusion linked to audible alarm systems for alerting others to a potential crime.

A number of alarm notification and reporting systems are already known which use conventional telephone lines for use in connection with residential property and other buildings. For example such systems provide for automatic calls to a security service provider when a security violation has occurred. However such systems can be rendered useless when the phone lines are cut or when the conventional phone system is not functional.

The reliability of such building-installed alarm systems can be enhanced by using known GSM cellular phone systems, which can be equipped with an automatic call initiating controller, allowing two-way communication between the owner or security service provider and an unattended cell-phone unit installed in a vehicle or property.

It is already known from WO2007/014835 to provide a video surveillance device comprising a camera, a UMTS interface for telephone connection with a UMTS external unit and means for managing said camera and said interface, being capable of activating said camera and of commanding the dispatch of images coming from the camera to the external UMTS unit, acting as a remote camera to be interrogated by the user by means of a call with a UMTS mobile telephone.

These systems however cannot meet completely the demands for improved security, and user friendly characteristics.

### SUMMARY

A first aspect of the present invention provides a video surveillance and home security apparatus using the UMTS network, and a second aspect provides a method for the management of said apparatus, which mitigate problems within known solutions and which can provide improved security, efficiency and ease of use. One embodiment of the present invention is to provide for an advanced UMTS terminal specifically designed as a video surveillance and home security product which allows the user to manage, monitor and receive alerts from remote locations over the UMTS cellular network. The device has onboard local wireless connectivity which allows the user to simply and intuitively control "home automation" functions directly from a UMTS device.

The apparatus according to the first embodiment is characterized by: UMTS/GPRS connectivity, privacy management through a white list, alerting via outgoing video call, MMS or SMS messages, and user configuration via video call. It provides for local connectivity to various sensors and/or actuators through standard wireless connections. A video camera is also provided which can be controlled remotely using UII control messages and allowing local storage of video images.

In one embodiment, the present invention provides an apparatus for video surveillance and home security through a UMTS network comprising: first means for sending and/or receiving video calls to/from mobile video terminals through the UMTS network; second means for controlling and bidirectionally connecting to a video camera, one or more wireless sensors and one or more wireless actuators; said first and second means being able to trigger outgoing events when alarm conditions are detected and comprise means for performing one or more of the following actions:
a) sending Mobile Originated video calls and/or receiving Mobile Terminating video calls to or from said mobile video terminals;
b) automatically answering to incoming video calls;
c) sending and/or receiving SMS or MMS messages;
d) controlling video camera movements;
e) managing incoming video calls from said mobile video terminals, from a defined authorized list of numbers;
f) locally storing events, alarms and video capture, and generating alarms when specific events occur, on the basis of the handling of events generated by said sensors, actuators or camera.

A further embodiment of the present invention provides for a mobile video terminal comprising means for performing all the actions necessary for sending to and/or receiving video calls from an apparatus for video surveillance and home security through a UMTS network as in the present invention.

A still further embodiment of the present invention provides for a method for performing video surveillance and home security functions through a UMTS network.

These and further features and advantages are achieved by means of a video surveillance and home security apparatus using the UMTS network, and a method for the management of said apparatus, as described in the attached claims, which are considered an integral part of the present description.

### BRIEF DESCRIPTION OF DRAWINGS

The invention will become fully clear from the following detailed description, given by way of a mere exemplifying and non limiting example, to be read with reference to the attached drawing figures, wherein:
- Fig. 1 shows a block diagram of the system in accordance with the invention;
- Figures 2 and 3 show flow diagrams of parts of the method of management according to the invention.

The same reference numerals and letters in the figures designate the same or functionally equivalent parts.

### DESCRIPTION OF EMBODIMENTS

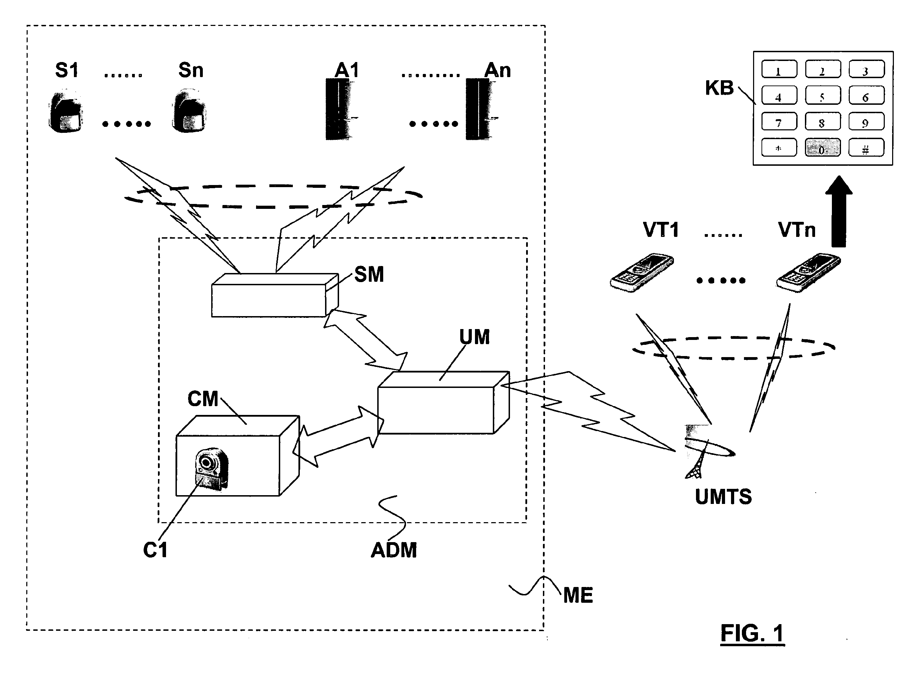

With reference to figure 1, the apparatus of the invention comprises a UMTS wireless system ME that allows to see and listen to what happens in a specific area to be surveyed, as for example a room or car park where it is placed.

It comprises one main video camera C1, wireless sensors S1....Sn or actuators A1....An, located in suitable positions in the area, in order to trigger outgoing events when an alarm is detected. Outgoing events may comprise intrusion attempts, or danger detection like presence of gases or fumes and the like.
In order to perform these functions the ME is attached and registered on a UMTS network using a standard USIM card and service, and can send and/or receive video calls to/from mobile video terminals VT1....VTn.

From the point of view of radio interface to UMTS network, the apparatus complies with known 3GPP specification, supporting both WCDMA and GSM/GPRS Radio Access Technologies of the known type. In particular the apparatus is able to support following services:
- Circuit switched calls and videocall (CS UDI 64 kbps bearer)
- Packet switched calls/services (MMS Service)
- Small Message Service SMS

Preferably it supports the following frequency bands:
- UMTS frequency bands 1, 2, 4 and 5
- GSM frequency bands 850, 900, 1800, 1900
The video terminals VT1....VTn comply with the 3GPP standard of Tx-Rx frequency separation.

### Alarm detection module ADM

The UMTS wireless system ME comprises an alarm detection module ADM controlling all the operations. It includes a module CM controlling the operation of the video camera, and a module SM controlling the operation of the sensors and actuators. In addition it includes a module UM for the management of the connection to an UMTS network.

When attached and registered on an UMTS standard network the apparatus is able to perform one or more of the following actions:
- attach to an UMTS network
- perform Mobile Originated video calls (MOC)
- receive Mobile Terminating video call (MTC)
- answer automatically to an incoming video call
- send SMS messages
- receive SMS messages
- send MMS messages
- allows remote camera movements (right/left/up/down, zooming), controls and configuration, via calling MS keypad UII control
- manage incoming calls following a defined authorized list of numbers, namely a White List WL, based on calling part MSISDNs
- manage the alarm detection module ADM based on the activation of the wireless sensors S1...Sn and actuators A1....An
- perform outgoing MMS/SMS messages based on input received from the ADM module
- local store of event/alarms and video capture (UMTS network not needed)

The ADM module generates alarms when specific events occur, on the basis of the handling of events generated by the remote sensors S1...Sn, actuators A1....An or camera C1. The sensors, actuators and camera may be of any known wireless type. The connection between ADM and sensors, actuators or camera is based on Wireless technology, of a known type, hereafter referred to as Personal Area Network (PAN).

For each Wireless PAN remote sensor activation string, an alarm will be raised. As soon as an alarm occurs, ADM performs a number of actions including the following:
a) register alarm details in an Event List, including information on:
   a. Activated sensor
   b. Date
   c. Time
   d. Camera Positioning
b) Camera C1 position is moved to the sensor or actuator position which has activated the alarm, either automatically or by means of user commands.
c) starts recording a video of fixed duration, for example in 3GPP standard format.
d) VideoCall is the default method when ADM module is active. If ADM raises an alarm, ADM advises an Alert List AL of numbers (which can be the same White List WL numbers) via VideoCall, MMS or SMS. ADM videocalls the first entry in AL list as soon as the alarm is raised. If the first entry is not available (not undercoverage or busy or not answering) ADM must try with the second entry. If the second user is not available, ADM must try with the third one, and so on... As soon as a videocall is successfully setup, the encoded camera output video is transmitted to the remote user endpoint.
e) If all the users listed in Alert List AL are not available, ADM sends a MMS message to all AL numbers, for alerting a Motion Detected. Wording and structure of MMS can be of a known type per se, for example including a video clip of a given time length, accompanied by a textual description. An SMS message can also be sent in place of or in addition to an MMS one.

When the apparatus starts sending video/audio captured by the camera C (i.e. after authentication of the remote endpoint, according to the described procedure), it start accepting UII messages received by the remote party as "remote controls" (according to the format H245 UII known per se), and assigns an action for the received UII message.
In order to modify the observed scene, the user can act on the calling mobile videophone keyboard KB, for example according to the following:
- 2 rotate framing up
- 6 rotate framing to the right
- 8 rotate framing down
- 4 rotate framing to the left
- 3 zoom-in
- 1 zoom-out
- 5 back to default position.
- 7 activate remote siren sound
- 0 activate/deactivate loudspeaker and volume control

The apparatus is able to restrict the incoming Video calls for security/privacy purpose. It provides two kinds of secure access calls:
- "Call Based Access" restricted to the White List of authorized subscribers, in the following CBA access;
- "Free Access", without restriction, in the following FA access.

### CAB - Call Based Access with White List Control

The apparatus is equipped with a specific PIN code, so as it answers to whichever videocall, introducing a PIN request form; after the input of such PIN it switches on audio/video transmission.

The apparatus accepts and responds to all incoming VideoCalls invoking the 3G-324M client control logical channel, in a known way. After the Videocall is started, the remote user is prompted to input an appropriate PIN code: the PIN code will be transported in the 3G-324M control logical channel using H.245 UII messages.

After receiving this PIN from the remote end-point, the apparatus performs a comparison between two PIN codes, the one sent by the remote user, the other one stored locally. If the two codes are identical then it transmits the video captured by the camera C. If these two codes are not identical then it disconnects the call, and presenting a failure screen image.
If a valid PIN code from the remote user is not received, in a predefined period of time (for example 60 s), then the VideoCall is disconnected.

At the istallation and set up phase, the first user which video-calls the apparatus (and is regularly authenticated by the PIN code) is eligible as Administrator AD of the apparatus, and is stored as such in the White List WL.
The Administrator AD can manage the White List WL, enabling, adding or deleting numbers of other authorized users.
A SuperAdministrator SAD number is stored inside the apparatus, and flexed as factory setting. The SAD number is regularly authenticated by a SuperPIN code SPIN. The SuperAdministrator cannot be allowed to place video calls, but can control the apparatus by SMS command Syntax. SuperAdministrator SAD can delete all the entries in the White List WL, AD included.
The apparatus is equipped with a security and protection system for SAD and SPIN numbers against any tentative of discovering them.

As a non limiting example, the White List WL comprises 20 memory entries which must be enabled. The active entries are identified by the "enable" flag, for example according to the following structure:

| Position | Number | Enabled |
|---|---|---|
| #1 | 000-0000000 | Y |
| #2 | 000-0000000 | Y |
| ...................... | | |
| #6 | 000-0000000 | N |
| #7 | 000-0000000 | N |
| #8 | 000-0000000 | N |
| ...................... | | |

Only the SuperAdministrator SAD can modify the dimension of the White List WL, thru a dedicated SMS Command. The White List WL is enabled only in the CAB configuration, while in FA configuration the White List WL is disabled but NOT erased (in order to keep trace of AD number). As factory setting the White List WL is empty. If the apparatus is refreshed, WL comes back to factory setting configuration.

### SMS commands

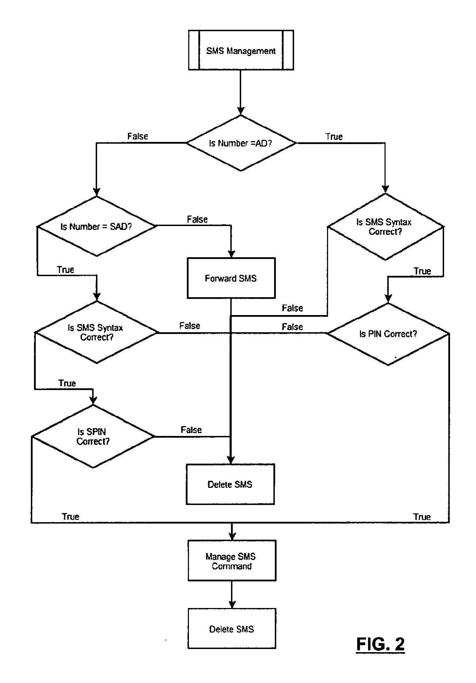

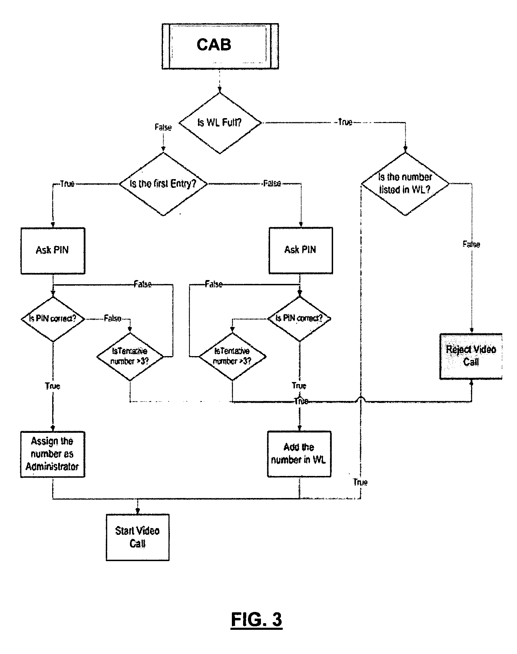

The apparatus considers only SMS commands received from Administrator AD or SuperAdministrator SAD number. The syntax for a valid Sms Command can be in the form:
#Command(*Data)#(S)PIN#
   where:
   ■ Command: name of command.
   ■ Data: command data. In case of Number data is only digits (0-9, '+'), in case of Option data can be any of ASCII character.
   ■ PIN: PIN code.
   ■ SPIN: SuperPIN code.
The SMS commands can be handled for example according to the workflow as depicted in fig. 2
The "Call Based Access" CBA with control of a White List can be implemented according to the workflow as depicted in fig. 3.

The description in the blocks of figures 2 and 3 is self-explanatory; further description details are not necessary here.

### FA - Free Access

In FA mode, the apparatus accepts and responds to all incoming VideoCalls invoking consequently the 3G-324M client control logical channel, irrespective of White List WL numbers and limitations. In FA configuration the White List WL is disabled.

### CBA - FA Handover

The apparatus is able to change configuration from CBA to FA and vice versa with the following constraints:
- The CBA configuration is a factory setting.
- Only the SuperAdministrator SAD can change configuration the first time from CBA to FA, since the user must have authorization from the service provider to do so.
- If the user has got this authorization, then the Administrator AD can switch configurations how many times he wants, without limitations.

All the actions performed by the apparatus described above are steps comprised in the method according to the invention. At least in part those steps can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Further implementation details will not be described, as the man skilled in the art is able to carry out the invention starting from the teaching of the above description. In particular this applies to the program for the implementation of the method described above: it can be carried out by using the normal programming languages and techniques known in the UMTS framework.

By means of the present invention, a number of advantages are achieved. The device provides an innovate control mechanism combining privacy control through the use of a proprietary "White List Function" and full remote control of domestic and industrial sensors and actuators through a VideoCall using a video menu. In particular the following functionalities are achieved:
- Wide Area Network Interface with Geographic UMTS+GPRS connectivity
- Personal Area Network Interface through wireless connections to external sensors and/or actuators
- Privacy Management through a white List
- Alerting via outgoing VideoCall, MMS, SMS
- Multimedia Interface configuration via Video Call
- VideoCamera remotely controlled using UII
- Local storage of video images

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

## Claims

1. Apparatus for video surveillance and home security through a UMTS network comprising:
- first means (UM) for sending and/or receiving video calls to/from mobile video terminals (VT1 ....VTn) through the UMTS network,
- second means (SM, CM) for controlling and bidirectionally connecting to a video camera (C1), one or more wireless sensors (S1....Sn) and one or more wireless actuators (A1....An);
said first and second means (UM, SM, CM) being able to trigger outgoing events when alarm conditions are detected and comprise means for performing one or more of the following actions:
a) sending Mobile Originated video calls (MOC) and/or receiving Mobile Terminating video calls (MTC) to or from said mobile video terminals (VT1....VTn);
b) automatically answering to incoming video calls;
c) sending and/or receiving SMS or MMS messages;
d) controlling video camera movements;
e) managing incoming video calls from said mobile video terminals (VT1....VTn), from a defined authorized list of numbers (White List WL);
f) locally storing events, alarms and video capture, and generating alarms when specific events occur, on the basis of the handling of events generated by said sensors (S1...Sn), actuators (A1....An) or camera (C1).

2. Apparatus as in claim 1, wherein said means for locally storing events, alarms and video capture comprise means for registering alarm details in an Event List, including information on: Activated sensor, Date, Time, video Camera Positioning.

3. Apparatus as in claim 1, wherein said means for generating alarms when specific events occur comprise means for advising an Alert List (AL) of numbers via VideoCall, MMS or SMS.

4. Apparatus as in claim 3, wherein said means for advising an Alert List (AL) of numbers is able to place a videocall to the first entry in the list as soon as the alarm is raised, and, if the first entry is not available, goes on until a videocall is successfully setup, and if all the numbers listed in the Alert List (AL) are not available, sends a MMS message and/or an SMS message to all the Alert List numbers.

5. Apparatus as in claim 1, wherein said means for controlling video camera movements control the video camera (C1) position to move to the sensor or actuator position which has activated the alarm.

6. Apparatus as in claim 1, wherein said means for managing incoming video calls from said mobile video terminals (VT1....VTn), from a defined authorized list of numbers (White List WL) provides two kinds of secure access calls:
- "Call Based Access" restricted to the authorized list of numbers;
- "Free Access", without restriction.

7. Apparatus as in claim 6, wherein said "Call Based Access" is controlled by means for PIN code validation, such that if a valid PIN code is not received, in a predefined period of time, then the VideoCall is disconnected.

8. Apparatus as in claim 1, wherein said means for managing incoming video calls from said mobile video terminals (VT1....VTn), manage said defined authorized list of numbers (White List WL), such that:
- the first number which video-calls the apparatus, after authentication by the PIN code, is elected and stored in said authorized list of numbers as Administrator (AD) of the apparatus, the Administrator (AD) being able to manage the authorized list of numbers, enabling, adding or deleting numbers of other authorized numbers;
- a SuperAdministrator (SAD) number is permanently stored inside the apparatus, the SuperAdministrator number being authenticated by a SuperPIN code (SPIN), through the SuperAdministrator number being not allowed to place video calls, and being allowed to control the apparatus by SMS commands, delete entries in the authorized list of numbers.

9. Apparatus as in claim 6, wherein said means for managing incoming video calls from said mobile video terminals (VT1....VTn), from a defined authorized list of numbers (White List WL), provides for handover function between said "Call Based Access" and said "Free Access", in such a way as:
- the "Call Based Access" configuration is a factory setting;
- only the SuperAdministrator (SAD) number can change configuration the first time from "Call Based Access" to "Free Access";
- if authorized, the Administrator number (AD) can switch configurations from "Call Based Access" to "Free Access" and viceversa.

10. Apparatus as in claim 8, wherein said means for sending and/or receiving SMS or MMS messages accept only SMS commands received from Administrator (AD) or SuperAdministrator (SAD) number.

11. Mobile video terminal (VT1....VTn) comprising means for performing all the actions necessary for sending to and/or receiving video calls from an apparatus for video surveillance and home security through a UMTS network as in any of the preceding claims.

12. Method for performing video surveillance and home security functions through a UMTS network comprising the steps of:
- sending and/or receiving video calls to/from mobile video terminals (VT1....VTn) through the UMTS network,
- controlling and bidirectionally connecting to a video camera (C1), one or more wireless sensors (S1....Sn), one or more wireless actuators (A1....An);
- sending Mobile Originated video calls (MOC) and/or receiving Mobile Terminating video calls (MTC) to or from said mobile video terminals (VT1....VTn);
- automatically answering to incoming video calls;
- sending and/or receiving SMS or MMS messages;
- controlling video camera movements;
- managing incoming video calls from said mobile video terminals (VT1....VTn), from a defined authorized list of numbers (White List WL);
- locally storing events, alarms and video capture, and generating alarms when specific events occur, on the basis of the handling of events generated by said sensors (S1...Sn), actuators (A1....An) or camera (C1).

13. Method as in claim 12, wherein said step of locally storing events, alarms and video capture comprises steps of registering alarm details in an Event List, including information on: Activated sensor, Date, Time, video Camera Positioning.

14. Method as in claim 12, wherein said step of generating alarms when specific events occur comprises steps of advising an Alert List (AL) of numbers via VideoCall, MMS or SMS.

15. Method as in claim 14, wherein said step of advising an Alert List (AL) of numbers comprises a step of placing a videocall to the first entry in the list as soon as the alarm is raised, and, if the first entry is not available, going on until a videocall is successfully setup, and if all the numbers listed in the Alert List (AL) are not available, sending a MMS message and/or an SMS message to all the Alert List numbers.

16. Method as in claim 12, wherein said step of controlling video camera movements comprises controlling the video camera (C1) position to move to the sensor or actuator position which has activated the alarm.

17. Method as in claim 12, wherein said step of managing incoming video calls from said mobile video terminals (VT1....VTn), from a defined authorized list of numbers (White List WL) comprises providing two kinds of secure access calls:
- "Call Based Access" restricted to the authorized list of numbers;
- "Free Access", without restriction.

18. Method as in claim 17, wherein said "Call Based Access" is controlled by a procedure of PIN code validation, such that if a valid PIN code is not received, in a predefined period of time, then the VideoCall is disconnected.

19. Method as in claim 12, wherein said step of managing incoming video calls from said mobile video terminals (VT1....VTn), manage said defined authorized list of numbers (White List WL), such that :
- the first number which video-calls the apparatus, after authentication by the PIN code, is elected and stored in said authorized list of numbers as Administrator (AD) of the apparatus, the Administrator (AD) being able to manage the authorized list of numbers, enabling, adding or deleting numbers of other authorized numbers;
- a SuperAdministrator (SAD) number is permanently stored inside the apparatus, the SuperAdministrator number being authenticated by a SuperPIN code (SPIN), through the SuperAdministrator number being not allowed to place video calls, and being allowed to control the apparatus by SMS commands, delete entries in the authorized list of numbers.

20. Method as in claim 17, wherein said step of managing incoming video calls from said mobile video terminals (VT1....VTn), from a defined authorized list of numbers (White List WL), provides for handover function between said "Call Based Access" and said "Free Access", in such a way as:
- the "Call Based Access" configuration is a factory setting;
- only the SuperAdministrator (SAD) number can change configuration the first time from "Call Based Access" to "Free Access";
- if authorized, the Administrator number (AD) can switch configurations from "Call Based Access" to "Free Access" and viceversa.

21. Method as in claim 19, wherein said step of sending and/or receiving SMS or MMS messages provides for accepting only SMS commands received from Administrator (AD) or SuperAdministrator (SAD) number.

22. Computer program comprising computer program code means adapted to perform all the steps of any one of claims 12 to 21, when said program is run on a computer.

23. A computer readable medium having a program recorded thereon, said computer readable medium comprising computer program code means adapted to perform all the steps of any one of claims 12 to 21, when said program is run on a computer.
